# EUROPEAN PATENT APPLICATION

(11) **EP 2 420 684 A1**
(43) Date of publication of application: **22.02.2012**
(21) Application number: 10173597.5
(22) Date of filing: 20.08.2010
(51) Int. Cl.: F16B 33/00, F16B 39/06

(54) **Bolt**

(71) Applicant: Alstom Technology Ltd, 5400 Baden (CH)
(72) Inventor: De Graaff, Tjerk Michiel, 5200, Brugg (CH); Kinces, Frantisek, 5432, Neuenhof (CH); Mayor, Kevin, 5412, Gebenstorf (CH)

(57) **Abstract**

The bolt (1) comprises a screw (2) with at least a threaded surface (4) having at least a cut out (5), and a nut (3) with a core and a threaded hole (7) for engaging the at least a threaded surface (4) of the screw (2). A blocking element (9) is insertable between the screw (2) and nut (3), to block them together. The nut (3) comprises a longitudinal slot (8) carved into its core and opening into its threaded hole (7). The longitudinal slot (8) is arranged to receive the blocking element (9). The blocking element (9) has a thickness (T) greater than the slot depth (t).

## Description

### TECHNICAL FIELD

The present invention relates to a bolt.

In particular, the present invention relates to a plastic bolt to be used in electric machines, preferably rotating electric machines, such as electric generator or electric motor.

### BACKGROUND OF THE INVENTION

Rotating electric machines have a number of components that are connected together via bolts that comprise screws and nuts.

Because of the particular application, such bolts must have insulating properties; for this reason they are typically made of an insulating material, such as plastic, glass fibres or other similar materials.

In addition, since during operation forces and vibration may generate that could cause the nut to unscrew from the screw, systems for blocking the connection are often provided.

DE 10 2005 009 145 discloses a screw with non-symmetrical threads generating a large friction when threaded into a threaded lock; this friction prevents unscrewing.

Because of the friction locking, the connection may unscrew when the bolt is subjected to thermal cycles and mechanical stress.

FR 530 465 discloses a bolt with a screw having a flat lateral surface and a nut having two transversal slots at opposite zones of its frontal face. When the nut is threaded onto the screw, one slot is aligned to the flat lateral surface and a wedge is inserted thereinto, to block the connection.

GB 134 170 discloses a bolt having a screw with a flat surface and a nut with transversal slots at its frontal face. When the nut is connected to the screw, a pin is inserted into one slot such that it bears against the flat surface, to lock the screw and nut together.

Since the slots are carved into the frontal face, the portions of the frontal face outwards of the slots of FR 530 465 and GB 134 170 could break.

GB 1 368 934 discloses a bolt with a plastic screw having two opposite lateral flat surfaces and a nut that can be screwed thereon. In order to lock the connection, a pin or key can be inserted into the gap between a flat surface and nut. In particular, the pin or key is inserted through the treads of the nut, but the core of the nut is not affected by them.

Since this connection requires the pin or key to rest against the threads of the nut, when the bolt is subjected to stress inevitably these threads are damaged. This causes an unpredictable shifting of the pin or key and, as a consequence, an unpredictable rotation of the nut with respect to the screw.

### SUMMARY OF THE INVENTION

The technical aim of the present invention therefore includes providing a bolt addressing the aforementioned problems of the known art.

Within the scope of this technical aim, an aspect of the invention is to provide a bolt that, notwithstanding the stress and/or thermal cycles, does not unscrew.

Another aspect of the invention is to provide a bolt whose components (in particular the nut) are stiff and have a limited risk of being damaged or broken because of the stress suffered during operation.

Still another aspect of the present invention is to provide a bolt in which the screw and the nut can be locked together such that their relative movement is prevented at all or is substantially predictable.

The technical aim, together with these and further aspects, are attained according to the invention by providing a bolt in accordance with the accompanying claims.

### BRIEF DESCRIPTION OF THE DRAWINGS

Further characteristics and advantages of the invention will be more apparent from the description of a preferred but non-exclusive embodiment of the bolt illustrated by way of non-limiting example in the accompanying drawings, in which:
Figure 1 is a perspective view of a bolt in an embodiment of the invention;
Figure 2 is a longitudinal section (upper part) and view (lower part) of a nut threaded into the screw;
Figure 3 is a cross section through line III-III of figure 2; and
Figure 4 shows a longitudinal section (upper part) and view (lower part) of a nut threaded into the screw in an embodiment of the invention with a wedge.

### DETAILED DESCRIPTION OF EMBODIMENTS OF THE INVENTION

With reference to the figures, these show a bolt 1 comprising a screw 2 and a nut 3 made of an insulating material such as plastic, glass fibres or any appropriate material.

The screw 2 may be any rod shaped element, with or without a head, having an end embedded in a component or not.

The screw 2 has two threaded surfaces 4 and one or two or even more cuts out 5.

The cuts out 5 extend over the whole length of the screw 2 and define longitudinal flat surfaces. Naturally, in different embodiments the cuts out may only extend over a portion of the length of the screw 2 (this portion being shorter than the whole screw length) to define flat surfaces.

As shown in the figures, no threads are provided at the cuts out 5.

The nut 3 has a core defining a threaded hole 7 for engaging the threaded surfaces 4 of the screw 2.

In addition, the nut 3 comprises one or two or even more longitudinal slots 8 (for example two slots at opposite radial positions), each carved into its core, opening into its hole 7 and arranged to receive a blocking element 9.

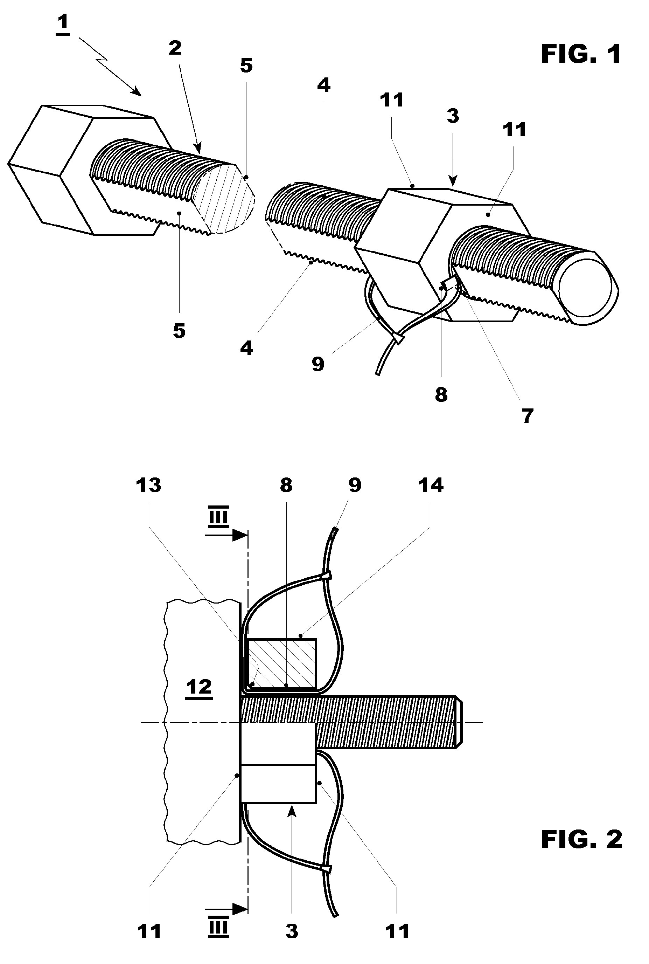

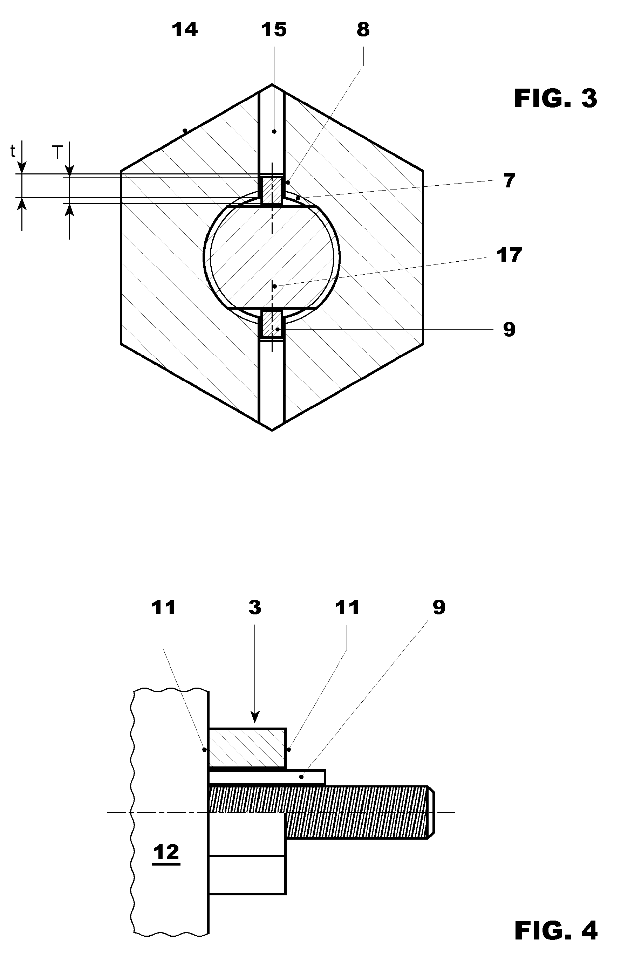

As shown in figures 2 and 3 (showing a first embodiment of the invention blocking a component 12) the longitudinal slot 8 has an end at a front side 11 of the nut 3 (the front sides are those sides having the threaded hole 7).

In contrast, the opposite end of the longitudinal slot 8 is provided at the lateral side 14 of the nut 3 (the lateral side 14 is that side of the nut 3 between the two front sides 11 having the threaded hole 7).

In this respect, the nut 3 comprises a slot portion 15 connected to the longitudinal slot 8; this slot portion 15 extends radially and is carved into a front side 11 of the nut 3.

Preferably, in order to improve blocking element insertion and prevent its breakage or damaging when in place, between the longitudinal slot 8 and the slot portion 15 a tapering 13 is provided.

As shown in the cited figures, in this embodiment the longitudinal slot 8 extends over the whole nut longitudinal length; it is anyhow clear that it may also extend over only a portion of the nut longitudinal length (for example in case the slot portion 15 lies within the nut core).

Naturally, even if this structure has been described and shown with the slot portion 15 and tapering 13 only at one side of the nut 3, in different embodiments it is also possible to provide the same structure with slot portion 15 and tapering 13 at both sides of the nut 3.

Figure 4 shows a different embodiment of the bolt 1 blocking a component 12.

In this embodiment the longitudinal slot 8 has two ends at the two opposite front sides 11 of the nut 3 (the front sides are those sides having the threaded hole 7).

In addition, the longitudinal slot 8 extends over the whole nut longitudinal length; it is anyhow clear that it may also extend over only a portion of the nut longitudinal length.

The blocking element 9 is made of an insulating material such as plastic and is insertable between the screw 2 and the nut 3, to block them together.

In particular, the blocking element 9 has a thickness T greater than the slot depth t.

In addition, the thickness T may be so large as or smaller than the largest distance between the bottom of the slot 8 and the corresponding cut out 5, when the nut 3 is screwed on the screw 2. As shown in the figures, this distance is measured along an axis 17 of the slot 8 when the axis 17 is perpendicular to the cut out 5.

A thickness T smaller than the largest distance between the bottom of the slot 8 and the corresponding cut out 5 allows prefixed relative rotations of the screw 2 and nut 3.

In a first embodiment (figures 2 and 3) the blocking element 9 is a lace that can be inserted into the slot 8 and its portions can be connected together to define a closed ring; preferably the lace is an electric cable tie; cable ties for nuclear application are preferred, but any cable tie may meet the requirements.

Alternatively, instead of the cable tie, the blocking element 9 may also be a wedge (figure 4).

The operation of the bolt of the invention is apparent from that described and illustrated and is substantially the following.

After having applied the screw 2, the nut 3 is screwed onto it.

In case the connection must have a pre-loading within a fixed range (as it is often the case), the nut 3 is screwed until the pre-load lies in the range, then the nut 3 is further rotated until the slots 8 face the cuts out 5 (remaining in the pre-load range).

Thus the blocking elements 9 are introduced into the slots 8. In this respect the cable ties are introduced into the slots 8 and their ends are joined together to define a closed ring; alternatively the wedges are inserted into the slots 8.

Naturally also one single blocking element 9 instead of two or more (cable ties or wedges) can be used to prevent rotation of the nut 3 on the screw 2.

Tests proved that when connected this way, the nut 3 may not move or can only make very small angles of rotation, that practically do not affect the pre-load.

Alternatively, selecting opportunely the thickness T of the blocking element 9, predetermined rotations of the nut 3 and, thus, predetermined axial movements of the nut 3, can be allowed.

In addition, since the blocking element 9 lies between the slot 8 and the cut out 5, neither the treads of the screw 2 (treaded surface 4), nor the treads of the nut 3 (treaded hole 7) came into contact with it; thus damaging of the threads and possible unpredictable rotation of the nut 3 are prevented.

Naturally the features described may be independently provided from one another.

In practice the materials used and the dimensions can be chosen at will according to requirements and to the state of the art.

### REFERENCE NUMBERS

- 1: bolt
- 2: screw
- 3: nut
- 4: threaded surface of 2
- 5: cut out of 2
- 7: threaded hole of 3
- 8: slot
- 9: blocking element
- 11: sides of 3
- 12: component
- 14: lateral side of 3
- 13: tapering
- 15: portion of 8
- 17: axis of 8
- t: depth of 8
- T: thickness of 9

## Claims

1. Bolt (1) comprising:
- a screw (2) with at least a threaded surface (4) having at least a cut out (5),
- a nut (3) with a core and a threaded hole (7) for engaging the at least a threaded surface (4) of the screw (2),
- a blocking element (9) insertable between the screw (2) and nut (3), to block them together,
**characterised in that**:
- the nut (3) comprises a longitudinal slot (8) carved into its core and opening into its threaded hole (7), the longitudinal slot (8) being arranged to receive the blocking element (9), and
- the blocking element (9) has a thickness (T) greater than a slot depth (t).

2. Bolt (1) as claimed in claim 1, **characterised in that** the longitudinal slot (8) of the nut (3) has at least an end at a front side (11) of the nut (3), the front side being a side having the threaded hole (7).

3. Bolt (1) as claimed in claim 1, **characterised in that** the longitudinal slot (8) of the nut (3) has at least an end at the lateral side (14) of the nut (3), the lateral side (14) being that side of the nut (3) between the front sides (11) having the threaded hole (7).

4. Bolt (1) as claimed in claim 3, **characterised in that** the nut (3) comprises a slot portion (15) connected to the longitudinal slot (8) and to the lateral side (14) of the nut (3).

5. Bolt (1) as claimed in claim 4, **characterised in that** the slot portion (15) is carved into the front side (11) of the nut (3).

6. Bolt (1) as claimed in claim 4, **characterised in that** between the longitudinal slot (8) and the slot portion (15) a tapering (13) is provided.

7. Bolt (1) as claimed in claim 1, **characterised in that** the longitudinal slot (8) of the nut (3) extends over the whole nut longitudinal length.

8. Bolt (1) as claimed in claim 1, **characterised in that** the blocking element (9) has a thickness (T) so large as or smaller than the largest distance between the bottom of the slot (8) and the cut out (5), when the nut (3) is screwed on the screw (2).

9. Bolt (1) as claimed in claim 1, **characterised in that** the blocking element (9) is a lace that can be inserted into the longitudinal slot (8) and its portions can be connected together to define a closed ring.

10. Bolt (1) as claimed in claim 1, **characterised in that** the at least a cut out (5) extends over the whole length of the screw (2) and defines a longitudinal flat surface.

11. Bolt (1) as claimed in claim 1, **characterised in that** the screw (2), the nut (3) and the blocking element (9) are made of an insulating material.

12. Nut (3) comprising a core and a threaded hole (7), **characterised by** further comprising a longitudinal slot (8) carved into its core and opening in its threaded hole (7).

13. Nut (3) as claimed in claim 12, **characterised in that** the longitudinal slot (8) has at least an end at a front side (11), the front side being a side having the threaded hole (7).

14. Nut (3) as claimed in claim 12, **characterised in that** the longitudinal slot (8) has at least an end at a lateral side (14), the lateral side (14) being that side between the front sides (11) having the threaded hole (7).

15. Nut (3) as claimed in claim 14, **characterised by** comprising a slot portion (15) connected to the longitudinal slot (7) and carved into the front side (11), wherein between the longitudinal slot (8) and the slot portion (15) a tapering (13) is provided.
